# EUROPEAN PATENT SPECIFICATION

(11) **EP 3 319 924 B1**
(45) Date of publication and mention of the grant of the patent: **24.02.2021**
(21) Application number: 16754333.9
(22) Date of filing: 07.07.2016
(51) Int. Cl.: C04B 40/02, C04B 26/06, C04B 26/10, C04B 111/00, C04B 14/04, C04B 14/06, C04B 14/22, C04B 14/28, C04B 14/30, C04B 26/18, C04B 26/14, B29C 67/24, B29L 31/10

(54) **A METHOD FOR MANUFACTURING A SLAB**
VERFAHREN ZUR HERSTELLUNG EINER PLATTE
PROCÉDÉ DE FABRICATION D'UNE PLAQUE

(30) Priority: 07.07.2015 NL 2015111
(43) Date of publication of application: 16.05.2018
(73) Proprietor: Innovative Stone Technologies B.V., 1033 SC Amsterdam (NL)
(72) Inventor: VAN GRAAFEILAND, Laurens Wouter, 1033 SC Amsterdam (NL); SCHONEVELD, Erik, 1033 SC Amsterdam (NL); VAN HELDEN, Arend Kuindert, 1033 SC Amsterdam (NL)
(74) Representative: Algemeen Octrooi- en Merkenbureau B.V.
(86) International application number: PCT/NL2016/050497
(87) International publication number: WO 2017/007322

(56) References cited:
- EP-B1- 0 178 308
- WO-A2-01/14277
- FR-A1- 2 981 373
- FR-A5- 2 088 773
- US-A- 4 576 856
- US-A1- 2006 119 002
- US-A1- 2008 006 957
- US-A1- 2008 111 267
- US-A1- 2013 171 377
- US-A1- 2014 335 325

## Description

The present invention relates to a method for manufacturing a slab comprising solid fillers and organic binders. More in detail the present method comprises mixing, shaping, pressing and cooling of starting materials comprising solid fillers, organic binders and additives. The present method furthermore relates to a slab obtained according to the present method.

Methods for manufacturing slabs are known from the prior art. For example, International application WO 2005/014952 (corresponding to US2006119002) relates to a thin, i.e. a thickness of 3.5 to 6 mm, stratified, reinforced slab consisting of two outer layers and at least one resistant middle layer wherein the outer layers and the at least one middle layer consist of the same permanently hardened mix, comprising inert materials and a binding resin. The mass of the middle layer is a fibrous layer where linear elements or filaments made of glass. The mix forming outer layers and at least one middle layer is a Breton stone mix. The technology according to Breton stone envisages using a mix consisting of inert materials and a cement binder or a binder consisting of a synthetic resin with the addition of fillers, wherein the mix, which is deposited in a suitable thickness inside a forming support, preferably in the form of two rubber sheets with dimensions matching those of the final slab desired, is subjected inside a vacuum chamber to the action of a press, the ram of which is kept vibrating at a redefined frequency. After the vacuum compaction accompanied by a vibratory movement, the resulting slab is transferred to a hot hardening station where, owing to the effect of heat, the resin hardens. The slab is then freed from the rubber sheets so that it can be conveyed away for the normal finishing operations (such as sizing, polishing, etc.).

US Patent application publication 2012/119414 relates to a process for manufacturing a slab having an average thickness of about 2.5 mm to about 50 mm from a composite material, said process comprising: (a) mixing solid filler and thermoplastic binder in a kneading device at a pressure in the range of about 100 kPa to about 1500 kPa to obtain a composite material; and (b) forming the composite material into a shaped article; wherein the thermoplastic binder comprises about 60 wt.% to about 100 wt.% of a thermoplastic polyester, based on the total weight of the binder, and wherein the thermoplastic polyester comprises about 90 wt.% to about 100 wt.% of recycled polyethylene terephthalate.

US Patent application publication 2012/049413 relates to a process for manufacturing a shaped article from a composite material, said process comprising mixing solid filler and thermoplastic binder in a mixing device to obtain a composite material, forming the composite material into a shaped article; and cooling the shaped article at a cooling rate of at least about 5 °C./min to about 120 °C./min, wherein the weight ratio of the solid filler to the thermoplastic binder is about 2:1 to about 15:1. shaped article is a slab. The shaped article is a slab having a thickness of about 0.3 cm to about 5 cm, wherein an upper surface and a bottom surface slab are cooled simultaneously by belt cooling.

US Patent application publication US 2013/130009 relates to an isotropic slab of engineered stone, having a thickness of about 2 mm to about 10 mm, the slab comprising a composite material comprising about 50 to about 95 wt.% of solid filler and about 5 to about 50 wt.% of a thermoplastic binder, based on the total weight of the isotropic slab. Such a slab has been manufactured according to a process comprising the following subsequent steps: feeding solid filler and a thermoplastic binder to a mixing device, mixing the solid filler and the thermoplastic binder in the mixing device at a temperature of 230 °C to 350 °C. to obtain a composite material, forming the composite material into a thin slab; and cooling the thin slab to a temperature greater than about 75 °C. by belt cooling.

International application WO02/090288 relates to a process for the preparation of a composition, which comprises a matrix of solid particles, i.e. a combination of aggregate, filler and sand, embedded in a binder, wherein the binder is present in an amount in the range of from 1 to 50 % by weight and comprises a synthetic thermoplastic polymer, i.e. waste or recycled polymer selected from the group of polypropylene, polyethylene terephthalate, polybutylene terephthalate and mixtures thereof, which process comprises mixing heated particles and binder, shaping if desired, and allowing the mixture to solidify, wherein solid particles and binder are heated independently of each other prior to mixing such that on mixing the temperature of the mixture is in the range of from 230 to 300 °C, and wherein the solid particles are heated to a higher temperature than the binder.

US Patent application publication US 2003/122273 relates to a method of manufacturing a building product from a mix including particulate material and a binder, wherein the binder being a thermoplastic binder which binder is an asphaltenes-containing binder, which comprises heating the mix including the thermoplastic binder at least to a temperature at which the thermoplastic binder in the mix liquefies, subjecting the heated thermoplastic mix to a pressing action that shapes the heated mix, and cooling the shaped heated thermoplastic mix to solidify the thermoplastic binder and form the building product.

US Patent No. 6,177,179 relates to a process for the production of an Integral, board-like component with a visible side and a rear side which comprises the steps: filling a casting mold with a first hardenable casting mass which contains a first syrup with a first monomer and a first filler for forming the visible side layer, further filling the casting mold with a second hardenable casting mass which contains a second syrup with a second monomer and filling a second inorganic filler into the casting mold, wherein the filler forms the rear side layer together with the second casting mass, closing the casting mold, and initiating the hardening of the first and the second casting masses, beginning on the visible side of the component, wherein the first filler has a greater specific density than the syrup of the first casting mass, wherein the barrier layer is essentially impermeable for the first monomer and can be securely bonded to the visible side layer as well as the rear side layer.

From International application WO 2013/011360 is known a method for obtaining a hybrid polymer coating for petrous or ceramic substrates, the coating having a thickness between 0.1 and 2 mm and comprising a mixture of micronized powder, gravels, base resin selected from polyurethane, polyester, epoxy or acrylic and in general pigments and additives for said resin. The method comprises a step of preparing a base mixture comprising at least one first gravel of quartz, silica or silica sand in a mixer, preparing a base resin selected from polyurethane, polyester, epoxy or acrylic, adding the resin to the mentioned mixture and stirring in a mixer, creating a vacuum inside the mixer, applying a layer of the semi-fluid mixture obtained on a substrate and retaining on the same, vibrating the substrate to displace the larger gravels towards the bottom; accelerating the curing of the mixture by providing or generating heat, the mixture being consolidated on the substrate, and mechanical finishing including a mechanical polishing of the coating polymer to obtain the mentioned thickness required and a smooth surface.

Such a vibration process for causing a degree of migration of particles from one layer to another layer is also known from International application WO 2004035502. This document discloses a method of forming a particle mass comprising at least two particle populations arranged in a desired graded relationship, the method comprising: forming in a container a first layer of dry particles constituting a first particle population having a desired particle size distribution, superimposing on the first layer a second layer of dry particles constituting a second particle population having a desired particle size distribution, the second layer being in direct contact with the first layer at a contact interface, and causing the particle mass in the container to vibrate to cause a desired degree of migration of particles from one or both layers across the contact interface under the influence of force experienced by particles in the mass.

JP2006137807 relates to an epoxy resin compact obtained by impregnating epoxy resin into a fiber glass mat as reinforcing material. A mixture (250-350 weight parts) of hydrated aluminum-powder of large particle size group having particle size of 15-100 micrometer and small particle size group with particle size of less than 4 micrometer is mixed with an epoxy resin (100 weight parts) to obtain a varnish. The varnish was impregnated into a fiber glass mat and heated at 120[deg]C for 10 minutes, to obtain a prepreg. The initial and final filler distribution is the same across the final product.

JP2005089648 relates to an insulating plate of electric switch used for motor circuits, prepared by impregnating a fiber glass mat with a mixture containing granular filler for improving arc resistance, a resin binder, and hardener for resin binder to form a prepreg and molding the formed prepreg. Such a mixture contains filler, binder and hardener, wherein the filler, i.e. aluminum hydroxide, contains particles of large size (15-100 micron) and particles of small size (less than 4 micron), in mass ratio of 10:6-10:14. The initial and final filler distribution is the same across the final product.

JPS54-37174 relates to a moulding fibre reinforced plastic material by pulverizing components, forming a slurry, applying the slurry to web, drying and moulding under heat and pressure. This document discloses the pulverization of an epoxy resin and hardener to particles smaller than 50 micrometer and the subsequent preparation of a slurry with silica powder, colloid silica and methanol. The slurry was applied to a glass fibre mat and five sheets of the web were laminated under pressure and heat to obtain a flame retardant sheet. The initial and final filler distribution is the same across the final product.

JPS54162781 relates to insulating boards for tightening rails with slabs, prepared by moulding glass fibre reinforced unsaturated polyester, quartz sand filler and additives mixture at specific temperature and pressure. The mixture as disclosed therein contains unsaturated polyester, calcium carbonate powder and quartz powder containing 99.9% of Si02, 50% of the particles having a size of 2 - 10 micrometer and is impregnated into a glass mat, and moulded in a mould. The initial and final filler distribution is the same across the final product

FR 2088773 discloses a slab produced in a continuous process or in a mould, comprising an organic thermosetting binder, fillers and aggregates and having a rear layer composed of lightweight aggregates.

On basis of the above discussion of relevant prior art one must realize that nowadays a wide range of polymer-filler composite products is used in the construction of buildings, cars, aviation etc. These products are manufactured with different technologies that can basically be divided into two categories, namely i) chemical processes employing a liquid thermoset resin that solidifies via chemical reaction (like two component adhesives) and ii) mechanical processes using a thermoplastic resin at high temperature, that subsequently solidifies by cooling.

In the technical area of artificial (or engineered) stone products for the building industry require very high levels of fillers, e.g. up to 90% by weight, to mimic the stone like features of natural stone products. A very important technical challenge is how to effectively mix such very highly filled polymer-mineral composites, while at the same time keeping the wear of the mixing devices at an acceptable level.

As discussed above, some processes employ thermoset resins, mainly in a batch process. The presence of a liquid resin in the mixture of starting material enables mixing while minimizing erosion or abrasion. However, such a batch process is capital intensive, generates industrial waste; uses (toxic) chemicals and limits plant productivity and the flexibility of product dimensions. The slab produced according to these batch processes has generally a minimum thickness of typically 10 mm (due to process constraints and mechanical properties) and the maximum length is about 3600 mm (due to process equipment constraints, such as batch press dimensions).

It has also been attempted to use thermoplastic or thermoset resins in a continuous (mechanical) process. Such a technology would need less capital investment having higher productivity and would lead to a reduction of waste, avoidance of toxic chemicals and increase of flexibility in product dimensions. However, such attempts have proven to be unsuccessful, because machine wear is too high when high concentration of hard coarse minerals are used for manufacturing high quality end products and degassing the end product to a final product free of air pores has shown to be unviable at such low binder content in a continuous process.

An aspect of the present invention is to provide a method for manufacturing a slab wherein one or more of the objections as discussed above are overcome.

More in detail, an aspect of the present invention is to provide a method for manufacturing a slab wherein a slab having excellent product properties is obtained.

The present invention relates thus to a method for manufacturing a slab having a front layer and a rear layer, said slab comprising fillers, organic binders and additives, said method comprises mixing starting materials comprising fillers, organic binders and additives, heating, shaping, pressing and cooling, characterized in that said method comprises the following steps:
i) providing a mixture comprising organic binders, additives and fillers, wherein said fillers comprise fine particles and a first amount of coarse particles, and heating said mixture, the particle size distribution of the fine particles is chosen from a range below 63 micron, the particle size distribution of the first amount of coarse particles is chosen from a range between 63-800 micron;
ii) providing a porous substrate layer, said fine particles having a size smaller than the pore size of the porous substrate layer;
iii) contacting the mixture of step i) with the porous substrate layer of step ii);
iv) exerting a pressure on the construction obtained in step iii) for migrating said organic binder and said fine particles from said mixture of step i) into said porous substrate layer;
v) cooling the construction obtained in step iv) for obtaining a slab, wherein due to said step iv) the concentration of said first amount of coarse particles in said front layer of said slab is higher than in said rear layer of said slab.

The present inventors found that by using such a method for manufacturing a slab one or more of the above identified aspects can be achieved. According to the present method the effect of step iv) is that both binder and fine particles present in the mixture according to step i) will migrate into the porous substrate layer according step ii) resulting in an enrichment of the first amount of coarse particles on one side of the final slab. This enrichment of coarse particles will result in an increase of the surface hardness of the final slab, especially at the side where this enrichment is present. During step iv) the concentration of the first amount of coarse particles in the mixture of step i) will increase due to the migration of binder and fine particles into the porous substrate layer. Thus the concentration of the first amount of coarse particles in the mixture of step i) at the beginning of the present method will be much lower than the concentration of the first amount of coarse particles at the end of step iv). According to the present method there is a migration of the organic binder and fine particles resulting in a selective filtering of the first amount of coarse particles. The present method will thus result in a change in filler distribution during the manufacturing process, i.e. the formation of a filler concentration profile across the thickness of the final slab after the manufacturing process. The present method thus relates to a selective filler migration of binder and fine particles from the front layer to the rear layer, i.e. binder and fine particles passing through porous substrate layer, while the first amount of coarse particles is retained in the front layer. In practice some parts of organic binder and fine particles will remain in the front layer of the slab. This organic binder will function as a "matrix" for the first amount of coarse particles.

Examples of such a porous substrate layer are a glass fiber matt, voids of a loose particulate material, e.g. dry powder, or a combination thereof. The present method will lead to products, e.g. slabs, that are non isotropic, but also display a non homogeneous distribution of coarse particles, fine particles and binder in the final product. The present inventors found that the final concentration profile of the coarse particles, i.e. in the slab, depends on the initial front and rear layer composition and pore size of the porous substrate layer, i.e. a mat, e.g. a glass fiber mat, a loose particulate material, e.g. dry powder, or a combination thereof. In a specific embodiment of the present method the concentration of coarse particles in the front layer can be lower than the concentration of coarse particles in the rear layer. The present invention specifically relates to an increase of the concentration of coarse particles in the front layer during the pressing process, i.e. step iv), thus raising the Barcol hardness of the final product, i.e. the slab.

The pore size of the porous substrate layer is such that during step iv) the first amount of coarse particles will not migrate into the porous substrate layer. The pore size of the porous substrate layer is chosen such that the porous substrate layer will function as a selective filter or membrane wherein only fine particles and organic binder, having a size smaller than the pore size of the porous substrate layer can migrate into the pores, interstices or voids of the porous substrate layer. The result of such a selective filtering property of the porous substrate layer is that materials having a size bigger than the pores, interstices or voids of the porous substrate layer will remain in the originally provided mixture.

According to a preferred embodiment of the present method the concentration of the fine particles in the rear layer is higher than the concentration of the fine particles in the front layer.

In addition by providing two separate compositions, i.e. the mixture according to step i) and the porous substrate layer according to step ii), the present inventors were able to prepare a composition of coarse particles and organic binder which does not have a high impact on the life time of the mixing equipment, i.e. abrasion of the apparatuses.

The porous substrate layer in step ii) is a mat, a loose particulate material, or a combination thereof. The substrate layer as such has pores since binder and fine particles must migrate into the substrate layer, whereas the first amount of coarse particles must stay in the mixture. In an embodiment of a mat, such a mat is a porous mat.

In an embodiment of a loose particulate material, the loose particulate material comprises a second amount of coarse particles.

In a preferred embodiment the porous substrate layer in step ii) comprises a porous mat chosen from the group of glass fibers, flax fibers, Abaca fibers, coir fibers, hemp fibers, jute fibers, carbon fibers and basalt fibers, or a combination thereof. A benefit of using such a porous mat is to increase the impact resistance and flexural strength of the final product.

In the present method the organic binder is preferably chosen from the group of thermoset and thermoplast type binders, or a combination thereof.

In case of the application of thermoset type binders in step i) the present method further comprises a step of heating during one or more of step i), step ii), step iii) and step iv).

Present step i) may further comprise mixing organic binders, additives and fillers at an elevated temperature.

In a preferred embodiment step iii) further comprises applying the mixture comprising organic binders, additives and fillers on a support in a continuous mode and applying the porous substrate layer on top of said mixture laying on the support.

In another preferred embodiment step iii) further comprises applying the porous substrate layer on a support in a continuous mode and applying the mixture comprising organic binders, additives and fillers on top of the porous substrate layer laying on the support.

An example of such a support is an end less conveyor belt.

For obtaining a high pressure in a continuous mode of the present method step iv) further comprises transferring the support, the support comprising the porous substrate layer and the mixture comprising organic binders, additives and fillers through a slit between rotating rolls. By adjusting the width of the slit between the rotating rolls both the pressure exerted on the feed material and the thickness of pressed feed material can be set at a desired range.

The present inventors found that the presence of air bubbles in the binder containing mixture will have a negative influence on the final mechanical properties of the final slab. It is thus preferred to further include in step i) a step of de-aeration, preferably during or after mixing said organic binders, additives and fillers. Such a step of de-aeration can be carried out by vibrating the mixture with an under pressure, i.e. vacuum conditions in the mixing unit and or the press. Such a step of de-aeration may also comprise the application of an under pressure without vibration.

In another embodiment of the present method step iii) further comprises the positioning of a porous reinforcement material, such as a porous substrate layer, e.g. a porous mat, on the interface between said mixture comprising organic binders, additives and fillers and a layer of loose particulate material. Such a porous reinforcement material will lead to an improved impact resistance of the final product and may prevent the transfer of the first amount of coarse particles from the mixture to the layer of loose particulate material. However, the porous reinforcement material may not hinder the transfer of the organic binder from the mixture into the layer of loose particulate material. Examples of such a porous reinforcement material are chosen from the group of glass fibers, flax fibers, Abaca fibers, coir fibers, hemp fibers, jute fibers, carbon fibers and basalt fibers, or a combination thereof. In a specific embodiment the porous reinforcement material is chosen from a nonwoven type mat or a woven type mat, preferably a glass fiber woven mat.

The particle size distribution of the fine particles in the mixture of step i) is chosen from a range below 63 micron.

It is preferred that the first amount of coarse particles differs from the second amount of coarse particles in one or more aspects chosen from the group of chemical composition, mineral type, particle size, particle shape and particle size distribution.

According to a preferred embodiment the particle size distribution of the first amount of coarse particles is broader than the particle size distribution of the second amount of coarse particles. Such a particle size distribution allows a very high volume fraction of minerals in the final composition of the coarse enriched first layer.

The particle size distribution of the first amount of coarse particles is chosen from a range between 63-800 micron, wherein the particle size distribution of the second amount of coarse particles is chosen from a range within 200-1200 micron. More specifically, in a preferred embodiment the particle size distribution of the first amount of coarse particles is chosen from a range between 63-500 micron, wherein the particle size distribution of the second amount of coarse particles is chosen from a range within 500-800 micron. This particle size distribution of both the first and second amount of coarse particles will be chosen such that the final volume fraction of coarse minerals in the front layer is very high (> 0.75) yielding high product hardness, while the initial volume fraction of coarse minerals in the rear layer is lower for providing absorption capacity.

The present inventors found that the average particle size of the second amount of coarse particles as said porous substrate layer is chosen so that during step iv) organic binder and fine particles from said mixture of step i) migrate into said porous substrate layer.

The thickness of the slab obtained after step vi) is in a range of 2 to 10 mm.

According to a preferred embodiment the weight percentage of organic binder is in a range of 5 - 30 wt.%, the weight percentage of fillers is in a range of 50 to 95 wt.%, the weight percentage of additives is in a range of 0,1-5 wt.%, all weight percentages being based on the total weight of the slab obtained after step vi).

According to another preferred embodiment organic binder comprises 60 - 100 wt.% of thermoplastic polyester and 0 - 40 wt.% of a polyolefin, based on the total weight of the organic binder.

It is preferred that 90 - 100 wt.% of said thermoplastic polyester is one or more chosen from the group of polybutylene terephthalates, modified polyethylene terephthalates, recycled polyethylene furanoate, polycarbonates, polylactates and recycled polyethylene terephthalates, based on the total weight of the thermoplastic polyester.

The organic binder is preferably a thermoset type binder chosen from the group of unsaturated polyester resin, acrylic resin, epoxy resin or phenolic resin, or a combination thereof.

The porous reinforcement material is preferably chosen from a nonwoven type mat or a woven type mat, preferably a glass fiber woven mat, and possibly from other materials as discussed above.

Examples of the first amount of coarse particles are chosen from the group of inorganic minerals, such as quartz, glass, silica sand (SiO₂), calcium carbonates, such as marble (CaCO₃) or dolomite (CaMg(CO₃)₂), aluminum tri-hydrate (ATH), wollastonite (CaSiO₃), coesite, cristobalite, keatite, moganite, seifertite, stishovite and tridymite, especially inorganic minerals having a Mohs hardness of at least 7.

Examples of the second amount of coarse particles are chosen from the group of inorganic minerals, such as quartz, glass, silica sand (SiO₂), calcium carbonates, such as marble (CaCO₃) or dolomite (CaMg(CO₃)₂), aluminum tri-hydrate (ATH) and wollastonite (CaSiO₃).

The present method is preferably carried out as a continuous process, i.e. steps i) -v) are carried out in a continuous mode.

The present invention furthermore relates to a slab consisting of a front layer and a rear layer obtainable according to the present method as discussed above, wherein the concentration profile of the first amount of coarse particles shows a gradient over the thickness of said slab, wherein the concentration of said first amount of coarse particles in said front layer of the slab is higher than in said rear layer of the slab, wherein the thickness of the slab is in a range of 2 to 10 mm.

In a preferred embodiment of the present slab the concentration of fine particles in the rear layer of the slab is higher than the concentration of fine particles in the front layer of the slab.

According to another embodiment the rear layer of the slab comprises a mat. Such a mat is preferably chosen from the group of glass fibers, flax fibers, Abaca fibers, coir fibers, hemp fibers, jute fibers, carbon fibers and basalt fibers, or a combination thereof.

In a preferred embodiment the present slab further comprises a reinforcement material located at the interface of said front layer and said rear layer.

In a slab according to the present invention the particle size distribution of the first amount of coarse particles is chosen from a range between 63-800 micron, wherein the particle size distribution of the second amount of coarse particles is chosen from a range within 200-1200 micron.

The present slab is further characterized in that the Barcol Hardness exceeds a value of 65, preferably 75, in case of an organic thermoset type binder (according to ASTM D 2583-07 "Standard Test Method for Indentation Hardness of Rigid Plastics by Means of a Barcol Impressor").

The present slab is further characterized in that the Barcol Hardness exceeds a value of 55, preferably 70, in case of an organic thermoplast type binder (according to ASTM D 2583-07 "Standard Test Method for Indentation Hardness of Rigid Plastics by Means of a Barcol Impressor").

The present slab is further characterized in that the impact resistance of said slab is at least 10 J (according to EN 14617-9:2005), when the porous substrate layer used in step ii) comprises a second amount of coarse particles.

The present slab is further characterized in that the impact resistance of said slab is at least 20 J (according to EN 14617-9:2005), when the porous substrate layer is chosen from the group of glass fibers, flax fibers, Abaca fibers, coir fibers, hemp fibers, jute fibers, carbon fibers and basalt fibers, or a combination thereof.

Various aspects of the present invention are now illustrated by way of examples and comparative examples.

### Example 1 [sample IBQ 111]

A mixture of 21 wt.% of a thermoset resin (50% Epoxidised Linseed Oil (ELO) + 46% methyl hexahydro phthalic anhydride (MHHPA) + 3% 2-methyl imidazole (Melm)/alcohol mixture + 1% GLYMO) is mixed with 25 wt.% quartz powder 45 (fines) and 19 wt.% quartz 63-200 particles (coarse) and 35 wt.% quartz 200 - 500 particles (coarse) and heated to 60 °C. An amount of 10g hot mixture is transferred into a hot mould (60 °C) and contacted with an aggregate comprising 0,3g woven glass fiber mat (300 g/m²) and 5 g of dry hot (60 °C) quartz 500-800 particles (coarse) is added on top of the glass fiber. The hot product was pressed to ≥ 50 bar) for 4 minutes and cured at 140 °C during one hour and then cooled to ambient temperature. The hardness was measured after at least 1 hour cooling, according to ASTM D2583-07 and found to be 79,8. This example appears in the Table as IBQ 111.

### Example 2 [sample IBQ 117]

A mixture of 21 wt.% of a thermoset resin (50% ELO + 46% MHHPA + 3% Melm/alcohol mixture + 1% GLYMO) is mixed with 25 wt.% quartz powder 45 (fines) and 19 wt.% quartz 63-200 particles (coarse) and 35 wt.% quartz 200 - 500 particles (coarse) and heated to 60 °C. An amount of 10g hot mixture is transferred into a hot mould (60 °C) and contacted with an aggregate comprising 0.3 g woven glass fiber mat (300 g/m²) and 7g of dry hot (60 °C) quartz 500-800 particles (coarse) is added on top of the glass fiber. The hot product was pressed to ≥ 50 bar) for 4 minutes and cured at 140 °C during one hour and then cooled to ambient temperature. The hardness was measured after at least 1 hour cooling, according to ASTM D2583-07 and found to be 78. This example appears in the Table as IBQ 117.

### Example 3 [sample IBQ 86]

A mixture of 23 wt.% of a thermoset resin (50% ELO + 46% MHHPA + 3% 1,4-diazo-bicyclo-[2,2,2]Octane (DABCO)/alcohol mixture + 1% GLYMO) is mixed with 26 wt.% quartz powder 45 (fines) and 20 wt.% quartz 63-200 particles (coarse) and 31 wt.% quartz 200 - 500 particles (coarse) and heated to 60 °C. An amount of hot mixture is transferred into a hot mould (60 °C) and pressed to ≥ 50 bar) for 4 minutes and cured at 140 °C during one hour and then and cooled to ambient temperature. The hardness was measured after at least 1 hour cooling, according to ASTM D2583-07 and found to be 47,5. This example appears in the Table as IBQ 86.

### Example 4 [sample IBQ 87]

A mixture of 23 wt.% of a thermoset resin (50% ELO + 46% MHHPA+ 3% DABCO/alcohol mixture + 1% GLYMO) is mixed with 26 wt.% quartz powder 45 (fines) and 20 wt.% quartz 63-200 particles (coarse) and 31 wt.% quartz 200 - 500 particles (coarse) and heated to 60 °C. An amount of 9 g hot mixture is transferred into a hot mould (60 °C) and contacted with an aggregate comprising 1,5 g of glass fiber (biaxial 300 g/m²) added on top of the mixture. The hot product was pressed to ≥ 50 bar) for 4 minutes and cured at 140 °C during one hour and then cooled to ambient temperature. The hardness was measured after at least 1 hour cooling, according to ASTM D2583-07 and found to be 66,3. This example appears in the Table as IBQ 87.

### Example 5 [sample IBQ 88]

A mixture of 23 wt.% of a thermoset resin (50% ELO + 46% MHHPA + 3% DABCO/Alcohol mixture + 1% GLYMO) is mixed with 26 wt.% quartz powder 45 (Fines) and 20 wt.% quartz 63-200 particles (coarse) and 31 wt.% quartz 200 - 500 particles (coarse) and heated to 60 °C. An amount of 10g hot mixture is transferred into a hot mould (60 °C) and contacted with an aggregate comprising 0.6 g woven glass fiber mat (300 g/m²) and 4g of dry hot (60 °C) quartz 500-800 particles (coarse) is added on top of the glass fiber. The hot product was pressed to ≥ 50 bar) for 4 minutes and cured at 140 °C during one hour and then cooled to ambient temperature. The hardness was measured after at least 1 hour cooling, according to ASTM D2583-07 and found to be 65,3. This example appears in the Table as IBQ 88.

### Example 6 [sample IPQ 17]

20 wt.% of modified polyethylene terephthalate (PET-G) thermoplastic resin flakes and 21 wt.% quartz powder 45 (fines) and 27 wt.% quartz 63-200 particles (coarse) and 32 wt.% quartz 200 - 500 particles (coarse) are heated for 20 minutes at 240 °C and then mixed at 260 °C using a Hobart N50 mixer until the flakes are molten and a homogeneous mix is obtained. An amount of 17 g hot mixture is transferred into a hot mould (240 °C) and contacted with an aggregate comprising 2 g of dry hot (240 °C) quartz 500-800 particles (coarse) added on top of the mix. The hot product was pressed to ≥ 50 bar) for 4 minutes and cooled to ambient temperature. The hardness was measured after at least 1 hour cooling, according to ASTM2583-07 and found to be 56.

### Example 7 [sample IPQ 16]

20 wt.% of modified polyethylene terephthalate (PET-G) thermoplastic resin flakes and 21 wt.% quartz powder 45 (fines) and 27 wt.% quartz 63-200 particles (coarse) and 32 wt.% quartz 200 - 500 particles (coarse) are heated for 20 minutes at 240 °C and then mixed at 260 °C using a Hobart N50 mixer until the flakes are molten and a homogeneous mix is obtained. An amount of hot mixture is transferred into a hot mould (240 °C) without adding dry aggregate. The hot mix was pressed to ≥ 50 bar) for 4 minutes and cooled to ambient temperature. The Barcol hardness was measured after at least 1 hour cooling according to test method ASTM D 2583-07 and found to be 43,3.

The test results have been summarized in Table 1. From Table 1 one can learn that high Barcol Hardness values have been obtained for 111 and 117. For compositions not according to the invention, i.e. 86 and 16, the Barcol Hardness is low.

**Table 1: Test results**

| Sample | IBQ 111 | IBQ 117 | IBQ 86 | IBQ 87 | IBQ 88 | IPQ 17 | IPQ16 |
|---|---|---|---|---|---|---|---|
| Mixture Quantity, g | 10 | 10 | | 9 | 10 | 17 | |
| Thermoset Resin, %wt of Mix | 21 | 21 | 23 | 23 | 23 | | |
| Thefmoplast Resin, %wt of Mix | | | | | | 20 | 20 |
| Quartz Powder 45 micron, %wt of Mix | 25 | 25 | 26 | 26 | 26 | 21 | 21 |
| Coarse Quartz 63 - 200 micron, %wt of Mix | 19 | 19 | 20 | 20 | 20 | 27 | 27 |
| Coarse Quartz 200-500 micron, %wt of Mi | 35 | 35 | 31 | | 31 | 32 | 32 |
| | | | | | | | |

| Aggregate | | | | | | | |
|---|---|---|---|---|---|---|---|
| Glass Fiber, g | 0,3 | 0,3 | | 1,5 | 0,6 | | |
| Coarse Quartz 500-800 micron, g | 5 | 7 | | | 4 | 2 | |
| Pressure | >50 Bar | >50 Bar | >50 Bar | >50 Bar | >50 Bar | >50 Bar | >50 Bar |
| Barcol Hardness (ASTM D2583-07) | 79,8 | 78 | 47,5 | 66,3 | 65,3 | 56 | 43,3 |

The present inventors have carried out additional experiments. The methods used in these additional experiments are in agreement with the detailed method steps and conditions as shown in Examples 1-7 as discussed above.

Table 2 relates to thermoset resins, Table 3 to thermoplastic resins.

In Table 2 (thermoset resins) the reference value (IBQ86) is an example not according to the invention. The Barcol Hardness is about 47. IBQ87 shows that the use of a glass fiber mat as the porous substrate layer will result in an increase in Barcol Hardness of about 20 points. The use of even more glass fiber matts (IBQ103) will result in an even higher Barcol Hardness of 74.

IBQ82 relates to the use of a loose particulate material (particle size: 500-800 micrometer) as a porous substrate layer. The Barcol Hardness is 61, about 14 points higher than the reference value (IBQ86).

IBQ7 is an experiment not according to the present invention. This experiment failed since there was no penetration into the porous substrate layer, i.e. dry quartz identified as aggregate. The wet mix, i.e. the mixture of organic binders, additives and fillers, leaks away and does not wet the dry quartz. The hardness could not be measured. The particle size of the dry quartz is preferably > 200 microns, more preferably > 500 microns.

IBQ88, IBQ111 and IBQ117 relate to the use of both a glass fiber mat and a loose particulate material (particle size: 500-800 micrometer) as a porous substrate layer. The effect is an increase of Barcol Hardness to 65, 80 and 78 for IBQ88, IBQ111 and IBQ117, respectively.

IBQ142, IBQ170 and IBQ169 show the effect of the use of another mat on the Barcol Hardness.

IBQ121 and IBQ122 show the effect of the use of another type of organic binder on the Barcol Hardness.

IBQ104, IBQ107, IBQ110, IBQ112, IBQ113, IBQ116 show the effect of the concentration of fine particles in the mixture of step i).

In Table 3 (thermoplastic resins) the reference values (IPQ78, IPQ76, and IPQ82) are examples not according to the invention. The Barcol Hardness of these reference values is about 58, 61 and 62, respectively.

IPQ77, IPQ75 and IPQ81 are examples according to the present invention. These examples show that the use of a glass fiber mat as the porous substrate layer will result in an increase in Barcol Hardness of a value of 71, 69 and 70, respectively.

IPQ104, IPQ39 and IPQ149 show the effect of the use of a fiber mat as the porous substrate layer resulting in an increase in Barcol Hardness of a value of 67, 66 and 70, respectively.

IPQ16 is a reference value not according to the invention. The Barcol Hardness is about 43. IPQ17 shows the effect of a loose particulate material (particle size: 500-800 micrometer) as a porous substrate layer resulting in a Barcol Hardness of 56.

**Table 2: Test results**

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ86 | | | 23 | quartz | 26 | quartz | 63-500 | 51 | 0 | none | 0 | none | 23 | 47 |
| IBQ87 | 9 | | 23 | quartz | 26 | quartz | 63-500 | 51 | 1,5 | 3^{∗}ref2 | 0 | none | 20 | 66 |
| IBQ103 | 8 | | 21 | quartz | 22 | quartz | 63-500 | 59 | 2,2 | 6^{∗}ref2 | 0 | none | 16 | 74 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ86 | | | 23 | quartz | 26 | quartz | 63-500 | 51 | 0 | none | 0 | none | 23 | 47 |
| IBQ82 | 10 | | 23 | quartz | 26 | quartz | 63-500 | 51 | 0 | none | 6 | 500-800 | 15 | 61 |
| IBQ7 | 320 | | 23 | quartz | 33 | quartz | 63-500 | 44 | 0 | none | 80 | 63-500 | 17,2 | N.M. |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ86 | | | 23 | quartz | 26 | quartz | 63-500 | 51 | 0 | none | 0 | none | 23 | 47 |
| IBQ88 | 10 | | 23 | quartz | 26 | quartz | 63-500 | 51 | 0,6 | 1^{∗}ref2 | 4 | 500-800 | 16 | 65 |
| IBQ111 | 10 | | 21 | quartz | 25 | quartz | 63-500 | 54 | 0,3 | 1^{∗}ref2 | 5 | 500-800 | 13 | 80 |
| IBQ117 | 10 | | 21 | quartz | 25 | quartz | 63-500 | 54 | 0,3 | 1^{∗}ref2 | 7 | 500-800 | 13 | 78 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ142 | 200 | | 21 | quartz | 23 | quartz | 63-500 | 56 | 18 | 3^{∗}ref2 | 0 | none | 19 | 71 |
| IBQ170 | 200 | | 21 | quartz | 27 | quartz | 63-500 | 52 | 22 | 2^{∗}ref6 | 0 | none | 19 | 69 |
| IBQ169 | 200 | | 21 | quartz | 27 | quartz | 63-500 | 52 | 24 | 3^{∗}ref7 | 0 | none | 19 | 69 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ121 | 50 | E2590 | 23 | quartz | 26 | quartz | 63-500 | | 7 | 3^{∗}ref2 | 0 | none | 20 | 71 |
| IBQ122 | 50 | P345 | 23 | quartz | 26 | quartz | 63-500 | | 7 | 3^{∗}ref2 | 0 | none | 20 | 64 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level,%wt | type | level,%wt | type | psd,micron | level,%wt | g | type | | particle size | level,%wt | Hardness |
| IBQ104 | 10 | | 21 | quartz | 21 | quartz | 63-500 | 56 | 0,3 | 1^{∗}ref2 | 4 | 500-800 | 14 | 72 |
| IBQ107 | 10 | | 23 | quartz | 26 | quartz | 63-500 | 51 | 0,5 | 1^{∗}ref2 | 7 | 500-800 | 13 | 75 |
| IBQ110 | 10 | | 21 | quartz | 25 | quartz | 63-500 | 54 | 0,3 | 1^{∗}ref2 | 4 | 500-800 | 15 | 75 |
| IBQ112 | 8 | | 21 | quartz | 25 | quartz | 63-500 | 54 | 2 | 6^{∗}ref2 | 0 | none | 17 | 75 |
| IBQ113 | 10 | | 22 | quartz | 27 | quartz | 63-500 | 51 | 0,3 | 1^{∗}ref2 | 4 | 500-800 | 15 | 76 |
| IBQ116 | 10 | | 23 | quartz | 23 | quartz | 63-500 | 51 | 0,3 | 1^{∗}ref2 | 6 | 500-800 | 14 | 77 |

**Table 3: Test results**

| | Quantity | Resin | Resin | Fines | Fines | Coarse | Coarse | Coarse | Quantity | Fibermat | Quantity | Aggregate | Resin | B |
|---|---|---|---|---|---|---|---|---|---|---|---|---|---|---|
| | g | type | level,wt% | type | level,wt% | type | psd,micron | level,%wt | g | type | | particle size | level, %wt | arcol Hardness |
| IBQ75 | | 0.78 | 17 | quartz | 22 | quartz | 63-500 | 61 | 0 | none | 0 | none | 17 | 58 |
| IBP72 | 55 | rPET IV-8.24 | 12 | quartz | 22 | quartz | 63-500 | 62 | 6 | 3^{∗}ref2 | 0 | none | 15 | 72 |
| IBQ76 | | rPET IV-9.78 | 20 | quartz | 21 | quartz | 63-500 | 59 | 0 | none | 0 | none | 20 | 61 |
| IBQ78 | 75 | rPET IV-0.70 | 20 | quartz | 21 | quartz | 63-500 | 63 | 8 | 3^{∗}ref2 | 0 | none | 18.5 | 63 |
| IPQ82 | | rPET IV-0.74 | 20 | quartz | 18 | quartz | 63-500 | 52 | 0 | none | 0 | none | 30 | 62 |
| IPQ82 | 35 | rPET IV-0.78 | 30 | quartz | 28 | quartz | 63-500 | 52 | 8 | 3^{∗}ref2 | 0 | none | 20 | 70 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level %wt | type | level,%wt | type | psd,micron | level,%wt | g | type | | particles size | level,%wt | Hardness |
| IBQ304 | 50 | rPET IV-0.78 | 20 | quartz | 21 | quart | 63-308 | 50 | 4 | 3^{∗}ref2 | 0 | none | 180 | 67 |
| IBP38 | 55 | rPET IV-0.78 | 20 | quartz | 21 | quartz | 63-500 | 59 | 3 | 3^{∗}ref2 | 0 | none | 13 | 66 |
| IBQ143 | 322 | rPET IV-0.78 | 21 | quartz | 22 | quartz | 63-500 | 67 | 18 | 3^{∗}ref2 | 0 | none | 20 | 70 |
| | | | | | | | | | | | | | | |

| | Quantity | Resin | Resin | Fines | Fines | Coarse | Coarse | Coarse | Quantity | Fibermat | Quantity | Aggregate | Resin | Barcol |
|---|---|---|---|---|---|---|---|---|---|---|---|---|---|---|
| | g | type | level %wt | type | level,%wt | type | psd,micron | level,%wt | g | type | | particles size | level,%wt | Hardness |
| IBQ36 | | PET-G | 20 | quartz | 21 | quartz | 63-500 | 51 | 0 | none | 0 | none | 20 | 43 |
| IBQ17 | 17 | PET-G | 20 | quartz | 21 | quartz | 63-500 | 51 | 0 | none | 2 | 500-800 | 18 | 58 |

## Claims

1. A method for manufacturing a slab having a front layer and a rear layer, said slab comprising fillers, organic binders and additives, said method comprises mixing starting materials comprising fillers, organic binders and additives, heating, shaping, pressing and cooling, **characterized in that** said method comprises the following steps:
i) providing a mixture comprising organic binders, additives and fillers, wherein said fillers comprise fine particles and a first amount of coarse particles, and heating said mixture, the particle size distribution of the fine particles is chosen from a range below 63 micron, the particle size distribution of the first amount of coarse particles is chosen from a range between 63-800 micron;
ii) providing a porous substrate layer, said fine particles having a size smaller than the pore size of the porous substrate layer;
iii) contacting the mixture of step i) with the porous substrate layer of step ii);
iv) exerting a pressure on the construction obtained in step iii) for migrating said organic binder and said fine particles from said mixture of step i) into said porous substrate layer;
v) cooling the construction obtained in step iv) for obtaining a slab, wherein due to said step iv) the concentration of said first amount of coarse particles in said front layer of said slab is higher than in said rear layer of said slab.

2. A method according to claim 1, wherein said porous substrate layer in step ii) is a mat, a loose particulate material or a combination thereof, wherein said mat comprises a material chosen from the group of glass fibers, flax fibers, Abaca fibers, coir fibers, hemp fibers, jute fibers, carbon fibers and basalt fibers, or a combination thereof, wherein said loose particulate material comprises a second amount of coarse particles chosen from the group of inorganic minerals, such as quartz, glass, silica sand (SiO₂), calcium carbonates, such as marble (CaCO₃) or dolomite (CaMg(CO₃)₂), aluminum tri-hydrate (ATH) and wollastonite (CaSiO₃).

3. A method according to claim 2, wherein the particle size distribution of the second amount of coarse particles is chosen from a range within 200-1200 micron.

4. A method according to any one of claims 1-3 wherein said first amount of coarse particles is chosen from the group of inorganic minerals, such as quartz, glass, silica sand (SiO₂), calcium carbonates, such as marble (CaCO₃) or dolomite (CaMg(CO₃)₂), aluminum tri-hydrate (ATH), wollastonite (CaSiO₃), coesite, cristobalite, keatite, moganite, seifertite, stishovite and tridymite, especially inorganic minerals having a Mohs hardness of at least 7.

5. A method according to any one of claims 1-4, especially wherein the first amount of coarse particles differs from the second amount of coarse particles in one or more aspects chosen from the group of chemical composition, mineral type, particle size, particle shape and particle size distribution.

6. A method according to any one of claims 2-5, wherein the average particle size of the second amount of coarse particles as said porous substrate layer is chosen so that during step iv) organic binder and fine particles from said mixture of step i) migrate into said porous substrate layer.

7. A method according to any one of claims 1-6, wherein said organic binder is chosen from the group of thermoset and thermoplast type binders, or a combination thereof, wherein in case of thermoset type binders in step i) said method further comprises a step of heating during one or more of step i), step ii), step iii) and step iv), wherein step i) further comprises mixing organic binders, additives and fillers at an elevated temperature.

8. A method according to any one of claims 1-7, wherein step iii) further comprises applying said mixture comprising organic binders, additives and fillers on a support in a continuous mode and applying said porous substrate layer on top of said mixture laying on said support, especially wherein step iii) further comprises applying said porous substrate layer on a support in a continuous mode and applying said mixture comprising organic binders, additives and fillers on top of said porous substrate layer laying on said support, especially wherein step iv) further comprises transferring said support comprising said mixture comprising organic binders, additives and fillers and said porous substrate layer through a slit between rotating rolls.

9. A method according to any one of claims 1-8, wherein the construction obtained in step iii) comprises, in sequence, said mixture of step i), a mat and a layer of loose particulate material.

10. A method according to any one of claims 1-9, wherein the weight percentage of organic binder is in a range of 5 - 30 wt.%, the weight percentage of fillers is in a range of 50 to 95 wt.%, the weight percentage of additives is in a range of 0,1-5 wt.%, all weight percentages being based on the total weight of the slab obtained after step v), esepcially wherein said organic binder comprises 60 - 100 wt.% of thermoplastic polyester and 0 - 40 wt.% of a polyolefin, based on the total weight of the organic binder, especially wherein 90 - 100 wt.% of said thermoplastic polyester is one or more chosen from the group of polybutylene terephthalates, modified polyethylene terephthalates, recycled polyethylene furanoate, polycarbonates, polylactates and recycled polyethylene terephthalates, based on the total weight of the thermoplastic polyester, especially wherein said organic binder is a thermoset type binder chosen from the group of unsaturated polyester resin, acrylic resin, epoxy resin or phenolic resin, or a combination thereof.

11. A method according to any one of claims 1-10, wherein steps i) -v) are carried out in a continuous mode, especially wherein the concentration of said fine particles in said rear layer is higher than the concentration of said fine particles in said front layer.

12. A slab consisting of a front layer and a rear layer and obtained according to the method as disclosed in any one or more of the preceding claims, wherein the concentration profile of the first amount of coarse particles shows a gradient over the thickness of said slab, wherein the concentration of said first amount of coarse particles in said front layer of the slab is higher than in said rear layer of the slab, wherein the thickness of the slab is in a range of 2 to 10 mm.

13. A slab according to claim 12, wherein said rear layer of the slab comprises a mat, especially wherein said mat comprises a material chosen from the group of glass fibers, flax fibers, Abaca fibers, coir fibers, hemp fibers, jute fibers, carbon fibers and basalt fibers, or a combination thereof, especially wherein said mat is located at the interface of said front layer and said rear layer, especially wherein the particle size distribution of the first amount of coarse particles is chosen from a range between 63-800 micron, especially wherein the particle size distribution of the second amount of coarse particles is chosen from a range within 200-1200 micron.

14. A slab according to any one of claims 12-13, wherein the Barcol Hardness of said slab exceeds a value of 65, preferably 75, in case of an organic thermoset type binder, according to ASTM D 2583-07 "Standard Test Method for Indentation Hardness of Rigid Plastics by Means of a Barcol Impressor", or wherein the Barcol Hardness of said slab exceeds a value of 55, preferably 70, in case of an organic thermoplast type binder, according to ASTM D 2583-07 "Standard Test Method for Indentation Hardness of Rigid Plastics by Means of a Barcol Impressor".

15. A slab according to any one of claims 12-14, wherein the impact resistance of said slab is at least 10 J (according to EN 14617-9:2005), when the porous substrate layer as used in step ii) comprises a second amount of coarse particles, especially wherein the impact resistance of said slab is at least 20 J (according to EN 14617-9:2005), when the porous substrate layer comprises a material chosen from the group of glass fibers, flax fibers, Abaca fibers, coir fibers, hemp fibers, jute fibers, carbon fibers and basalt fibers, or a combination thereof.

## Patentansprüche

1. Verfahren zur Herstellung einer Platte, die eine vordere Schicht und eine hintere Schicht aufweist, wobei die Platte Füllstoffe, organische Bindemittel und Zusatzstoffe umfasst, wobei das Verfahren Mischen von Ausgangsmaterialien, die Füllstoffe, organische Bindemittel und Zusatzstoffe umfassen, Erhitzen, Formgeben, Pressen und Abkühlen umfasst, **dadurch gekennzeichnet, dass** das Verfahren die folgenden Schritte umfasst:
i) Bereitstellen eines Gemischs, das organische Bindemittel, Zusatzstoffe und Füllstoffe umfasst, wobei die Füllstoffe feine Partikel und eine erste Menge von groben Partikeln umfassen, und Erhitzen des Gemischs, wobei die Partikelgrößenverteilung der feinen Partikel ausgewählt ist aus einem Bereich von unter 63 Mikrometer, wobei die Partikelgrößenverteilung der ersten Menge von groben Partikeln ausgewählt ist aus einem Bereich zwischen 63 und 800 Mikrometer;
ii) Bereitstellen einer porösen Substratschicht, wobei die feinen Partikel eine kleinere Größe als die Porengröße der porösen Substratschicht aufweisen;
iii) Inkontaktbringen des Gemischs von Schritt i) mit der porösen Substratschicht von Schritt ii);
iv) Ausüben eines Drucks auf den bei Schritt iii) erhaltenen Aufbau, um das organische Bindemittel und die feinen Partikel aus dem Gemisch von Schritt i) in die poröse Substratschicht zu bewegen;
v) Abkühlen des bei Schritt iv) erhaltenen Aufbaus, um eine Platte zu erhalten, wobei aufgrund von Schritt iv) die Konzentration der ersten Menge von groben Partikeln in der vorderen Schicht der Platte höher als in der hinteren Schicht der Platte ist.

2. Verfahren gemäß Anspruch 1, wobei die poröse Substratschicht bei Schritt ii) eine Matte, ein loses partikelförmiges Material oder eine Kombination davon ist, wobei die Matte ein Material ausgewählt aus der Gruppe von Glasfasern, Flachsfasern, Abaka-Fasern, Kokosfasern, Hanffasern, Jutefasern, Kohlenstofffasern und Basaltfasern oder eine Kombination davon umfasst, wobei das lose partikelförmige Material eine zweite Menge von groben Partikeln ausgewählt aus der Gruppe von anorganischen Mineralien, wie z. B. Quarz, Glas, Siliciumdioxidsand (SiO₂), Calciumcarbonaten, wie z. B. Marmor (CaCO₃) oder Dolomit (CaMg(CO₃)₂), Aluminiumtrihydrat (ATH) und Wollastonit (CaSiO₃) umfasst.

3. Verfahren gemäß Anspruch 2, wobei die Partikelgrößenverteilung der zweiten Menge von groben Partikeln ausgewählt ist aus einem Bereich innerhalb von 200-1200 Mikrometer.

4. Verfahren gemäß einem der Ansprüche 1-3, wobei die erste Menge von groben Partikeln ausgewählt ist aus der Gruppe von anorganischen Mineralien, wie z. B. Quarz, Glas, Siliciumdioxidsand (SiO₂), Calciumcarbonaten, wie z. B. Marmor (CaCO₃) oder Dolomit (CaMg(CO₃)₂), Aluminiumtrihydrat (ATH), Wollastonit (CaSiO₃), Coesit, Cristobalit, Keatit, Moganit, Seifertit, Stishovit und Tridymit, insbesondere anorganischen Mineralien mit einer Mohs-Härte von wenigstens 7.

5. Verfahren gemäß einem der Ansprüche 1-4, insbesondere wobei die erste Menge von groben Partikeln in einer oder mehreren Eigenschaften ausgewählt aus der Gruppe von chemischer Zusammensetzung, Mineraltyp, Partikelgröße, Partikelform und Partikelgrößenverteilung von der zweiten Menge von groben Partikeln verschieden ist.

6. Verfahren gemäß einem der Ansprüche 2-5, wobei die mittlere Partikelgröße der zweiten Menge von groben Partikeln der porösen Substratschicht so ausgewählt ist, dass während Schritt iv) organisches Bindemittel und feine Partikel aus dem Gemisch von Schritt i) in die poröse Substratschicht wandern.

7. Verfahren gemäß einem der Ansprüche 1-6, wobei das organische Bindemittel ausgewählt ist aus der Gruppe von Bindemitteln vom Duroplast- und vom Thermoplasttyp oder einer Kombination davon, wobei im Fall von Bindemitteln vom Duroplasttyp bei Schritt i) das Verfahren ferner einen Schritt des Erhitzens während eines oder mehreren von Schritt i), Schritt ii), Schritt iii) und Schritt iv) umfasst, wobei Schritt i) ferner Mischen von organischen Bindemitteln, Zusatzstoffen und Füllstoffen bei einer erhöhten Temperatur umfasst.

8. Verfahren gemäß einem der Ansprüche 1-7, wobei Schritt iii) ferner Aufbringen des Gemischs, das organische Bindemittel, Zusatzstoffe und Füllstoffe umfasst, in einem kontinuierlichen Modus auf einen Träger und Aufbringen der porösen Substratschicht auf das Gemisch, das auf dem Träger liegt, umfasst, insbesondere wobei Schritt iii) ferner Aufbringen der porösen Substratschicht auf einen Träger in einem kontinuierlichen Modus und Aufbringen des Gemischs, das organische Bindemittel, Zusatzstoffe und Füllstoffe umfasst, auf die poröse Substratschicht, die auf dem Träger liegt, umfasst, insbesondere wobei Schritt iv) ferner Führen des Trägers, der das Gemisch umfasst, das das organische Bindemittel, Zusatzstoffe und Füllstoffe umfasst, und der porösen Substratschicht durch einen Schlitz zwischen sich drehenden Walzen umfasst.

9. Verfahren gemäß einem der Ansprüche 1-8, wobei der bei Schritt iii) erhaltene Aufbau der Reihe nach das Gemisch von Schritt i), eine Matte und eine Schicht von losem partikelförmigem Material umfasst.

10. Verfahren gemäß einem der Ansprüche 1-9, wobei der Gewichtsanteil an organischem Bindemittel in einem Bereich von 5-30 Gew.-% liegt, der Gewichtsanteil an Füllstoffen in einem Bereich von 50-95 Gew.-% liegt, der Gewichtsanteil an Zusatzstoffen in einem Bereich von 0,1-5 Gew.-% liegt, alle Gewichtsanteile auf das Gesamtgewicht der nach Schritt v) erhaltenen Platte liegt, insbesondere wobei das organische Bindemittel 60-100 Gew.-% an thermoplastischem Polyester und 0-40 Gew.-% an einem Polyolefin, bezogen auf das Gesamtgewicht des organischen Bindemittels, umfasst, insbesondere wobei 90-100 Gew.-% des thermoplastischen Polyesters eines oder mehrere ausgewählt aus der Gruppe von Polybutylenterephthalaten, modifizierten Polyethylenterephthalaten, recyceltem Polyethylenfuranoat, Polycarbonaten, Polylactaten und recycelten Polyethylenterephthalaten, bezogen auf das Gesamtgewicht des thermoplastischen Polyesters, sind, insbesondere wobei das organische Bindemittel ein Bindemittel vom Duroplasttyp ausgewählt aus der Gruppe von ungesättigtem Polyesterharz, Acrylharz, Epoxyharz und Phenolharz oder eine Kombination davon ist.

11. Verfahren gemäß einem der Ansprüche 1-10, wobei die Schritte i)-v) in einem kontinuierlichen Modus durchgeführt werden, insbesondere wobei die Konzentration der feinen Partikel in der hinteren Schicht höher als die Konzentration der feinen Partikel in der vorderen Schicht ist.

12. Platte, bestehend aus einer vorderen Schicht und einer hinteren Schicht und erhalten gemäß dem Verfahren gemäß einem der vorstehenden Ansprüche, wobei das Konzentrationsprofil der ersten Menge von groben Partikeln einen Gradienten über die Dicke der Platte aufweist, wobei die Konzentration der ersten Menge von groben Partikeln in der vorderen Schicht der Platte höher als in der hinteren Schicht der Platte ist, wobei die Dicke der Platte in einem Bereich von 2 bis 10 mm liegt.

13. Platte gemäß Anspruch 12, wobei die hintere Schicht der Platte eine Matte umfasst, insbesondere wobei die Matte ein Material ausgewählt aus der Gruppe von Glasfasern, Flachsfasern, Abaka-Fasern, Kokosfasern, Hanffasern, Jutefasern, Kohlenstofffasern und Basaltfasern oder eine Kombination davon umfasst, insbesondere wobei die Matte an der Grenzfläche zwischen der vorderen Schicht und der hinteren Schicht angeordnet ist, insbesondere wobei die Partikelgrößenverteilung der ersten Menge von groben Partikeln ausgewählt ist aus einem Bereich von zwischen 63 und 800 Mikrometer, insbesondere wobei die Partikelgrößenverteilung der zweiten Menge von groben Partikeln ausgewählt ist aus einem Bereich innerhalb von 200-1200 Mikrometer.

14. Platte gemäß einem der Ansprüche 12-13, wobei im Fall eines organischen Bindemittels vom Duroplasttyp die Barcol-Härte der Platte einen Wert von 65, vorzugsweise 75, gemäß ASTM D 2583-07 "Standard Test Method for Indentation Hardness of Rigid Plastics by Means of a Barcol Impressor" übersteigt, oder wobei im Fall eines organischen Bindemittels vom Thermoplasttyp die Barcol-Härte der Platte einen Wert von 55, vorzugsweise 70, gemäß ASTM D 2583-07 "Standard Test Method for Indentation Hardness of Rigid Plastics by Means of a Barcol Impressor" übersteigt.

15. Platte gemäß einem der Ansprüche 12-14, wobei die Schlagzähigkeit der Platte wenigstens 10 J (gemäß EN 14617-9:2005) beträgt, wenn die bei Schritt ii) verwendete poröse Substratschicht eine zweite Menge von groben Partikeln umfasst, insbesondere wobei die Schlagzähigkeit der Platte wenigstens 20 J (gemäß EN 14617-9:2005) beträgt, wenn die poröse Substratschicht ein Material ausgewählt aus der Gruppe von Glasfasern, Flachsfasern, Abaka-Fasern, Kokosfasern, Hanffasern, Jutefasern, Kohlenstofffasern und Basaltfasern oder eine Kombination davon umfasst.

## Revendications

1. Procédé de fabrication d'une plaque ayant une couche avant et une couche arrière, ladite plaque comprenant des charges, des liants organiques et des additifs, ledit procédé comprend le mélange de matières premières comprenant des charges, des liants organiques et des additifs, le chauffage, la mise en forme, le pressage et le refroidissement, **caractérisé en ce que** ledit procédé comprend les étapes suivantes consistant à :
i) fournir un mélange comprenant des liants organiques, des additifs et des charges, où lesdites charges comprennent des particules fines et une première quantité de grosses particules, et chauffer ledit mélange, la distribution granulométrique des particules fines est choisie dans une plage inférieure à 63 microns, la distribution granulométrique de la première quantité de grosses particules est choisie dans une plage comprise entre 63 et 800 microns ;
ii) fournir une couche de substrat poreux, lesdites particules fines ayant une taille inférieure à la taille des pores de la couche de substrat poreux ;
iii) mettre en contact le mélange de l'étape i) avec la couche de substrat poreux de l'étape ii) ;
iv) exercer une pression sur la construction obtenue à l'étape iii) pour faire migrer ledit liant organique et lesdites particules fines dudit mélange de l'étape i) dans ladite couche de substrat poreux ;
v) refroidir la construction obtenue à l'étape iv) pour obtenir une plaque, où en raison de ladite étape iv) la concentration de ladite première quantité de grosses particules dans ladite couche avant de ladite plaque est plus élevée que dans ladite couche arrière de ladite plaque.

2. Procédé selon la revendication 1, dans lequel ladite couche de substrat poreux à l'étape ii) est un mat, un matériau particulaire meuble ou une combinaison de ceux-ci, dans lequel ledit mat comprend un matériau choisi dans le groupe de fibres de verre, de fibres de lin, de fibres d'abaca, de fibres de coco, de fibres de chanvre, de fibres de jute, de fibres de carbone et de fibres de basalte, ou d'une combinaison de celles-ci, où ledit matériau particulaire meuble comprend une deuxième quantité de grosses particules choisies dans le groupe de minéraux inorganiques, tels que le quartz, le verre, le sable de silice (SiO₂), les carbonates de calcium, tels que le marbre (CaCO₃) ou la dolomite (CaMg(CO₃)₂), le trihydrate d'aluminium (ATH) et la wollastonite (CaSiO₃).

3. Procédé selon la revendication 2, dans lequel la distribution granulométrique de la deuxième quantité de grosses particules est choisie dans une plage allant de 200 à 1200 microns.

4. Procédé selon l'une quelconque des revendications 1 à 3, dans lequel ladite première quantité de grosses particules est choisie dans le groupe de minéraux inorganiques, tels que le quartz, le verre, le sable de silice (SiCO₂), les carbonates de calcium, tels que le marbre (CaCO₃) ou la dolomite (CaMg(CO₃)₂), le trihydrate d'aluminium (ATH), la wollastonite (CaSiO₃), la coésite, la cristobalite, la keatite, la moganite, la seifertite, la stishovite et la tridymite, en particulier les minéraux inorganiques ayant une dureté Mohs d'au au moins 7.

5. Procédé selon l'une quelconque des revendications 1 à 4, en particulier dans lequel la première quantité de grosses particules diffère de la deuxième quantité de grosses particules par un ou plusieurs aspects choisis dans le groupe de composition chimique, de type minéral, de taille de particules, de forme de particules et de distribution granulométrique.

6. Procédé selon l'une quelconque des revendications 2 à 5, dans lequel la taille moyenne des particules de la deuxième quantité de grosses particules comme ladite couche de substrat poreux est choisie de sorte qu'au cours de l'étape iv) le liant organique et les particules fines dudit mélange de l'étape i) migrent dans ladite couche de substrat poreux.

7. Procédé selon l'une quelconque des revendications 1 à 6, dans lequel ledit liant organique est choisi dans le groupe de liants de type thermodurcissable et thermoplastique, ou d'une combinaison de ceux-ci, dans lequel, dans le cas de liants de type thermodurcissable à l'étape i), ledit procédé comprend en outre une étape de chauffage pendant une ou plusieurs de l'étape i), de l'étape ii), de l'étape iii) et de l'étape iv), où l'étape i) comprend en outre le mélange de liants organiques, d'additifs et de charges à une température élevée.

8. Procédé selon l'une quelconque des revendications 1 à 7, dans lequel l'étape iii) comprend en outre l'application dudit mélange comprenant des liants organiques, des additifs et des charges sur un support en mode continu et l'application de ladite couche de substrat poreux au-dessus dudit mélange reposant sur ledit support, en particulier dans lequel l'étape iii) comprend en outre l'application de ladite couche de substrat poreux sur un support en mode continu et l'application dudit mélange comprenant des liants organiques, des additifs et des charges au-dessus de ladite couche de substrat poreux reposant sur ledit support, en particulier dans lequel l'étape iv) comprend en outre le transfert dudit support comprenant ledit mélange comprenant des liants organiques, des additifs et des charges et ladite couche de substrat poreux à travers une fente entre des rouleaux rotatifs.

9. Procédé selon l'une quelconque des revendications 1 à 8, dans lequel la construction obtenue à l'étape iii) comprend, en séquence, ledit mélange de l'étape i), un mat et une couche de matériau particulaire meuble.

10. Procédé selon l'une quelconque des revendications 1 à 9, dans lequel le pourcentage en poids de liant organique est compris dans une plage allant de 5 à 30% en poids, le pourcentage en poids de charges est compris dans une plage allant de 50 à 95% en poids, le pourcentage en poids d'additifs est compris dans une plage allant de 0,1 à 5% en poids, tous les pourcentages en poids étant basés sur le poids total de la plaque obtenue après l'étape v), où en particulier ledit liant organique comprend 60 à 100% en poids de polyester thermoplastique et 0 à 40% en poids d'une polyoléfine, par rapport au poids total du liant organique, où en particulier 90 à 100% en poids dudit polyester thermoplastique est un composé ou plusieurs composants choisis dans le groupe de téréphtalates de polybutylène, de téréphtalates de polyéthylène modifiés, de polyéthylène furanoate recyclé, de polycarbonates, de polylactates et de téréphtalates de polyéthylène recyclés, par rapport au poids total du polyester thermoplastique, en particulier dans lequel ledit liant organique est un liant de type thermodurcissable choisi dans le groupe de résine polyester insaturée, de résine acrylique, de résine époxy ou de résine phénolique, ou d'une combinaison de celles-ci.

11. Procédé selon l'une quelconque des revendications 1 à 10, dans lequel les étapes i) - v) sont effectuées en mode continu, en particulier dans lequel la concentration desdites particules fines dans ladite couche arrière est supérieure à la concentration desdites particules fines dans ladite couche avant.

12. Plaque constituée d'une couche avant et d'une couche arrière et obtenue selon le procédé tel que divulgué dans l'une ou plusieurs des revendications précédentes, dans laquelle le profil de concentration de la première quantité de grosses particules montre un gradient sur l'épaisseur de ladite plaque, dans laquelle la concentration de ladite première quantité de grosses particules dans ladite couche avant de la plaque est plus élevée que dans ladite couche arrière de la plaque, dans laquelle l'épaisseur de la plaque est comprise dans une plage allant de 2 à 10 mm.

13. Plaque selon la revendication 12, dans laquelle ladite couche arrière de la plaque comprend un mat, en particulier dans laquelle ledit mat comprend un matériau choisi dans le groupe de fibres de verre, de fibres de lin, de fibres d'abaca, de fibres de coco, de fibres de chanvre, de fibres de jute, de fibres de carbone et de fibres de basalte, ou d'une combinaison de celles-ci, en particulier dans laquelle ledit mat est situé à l'interface de ladite couche avant et de ladite couche arrière, en particulier dans laquelle la distribution granulométrique de la première quantité de grosses particules est choisie dans une plage entre 63 et 800 microns, en particulier dans laquelle la distribution granulométrique de la deuxième quantité de grosses particules est choisie dans une plage allant de 200 à 1200 microns.

14. Plaque selon l'une quelconque des revendications 12 et 13, dans laquelle la dureté Barcol de ladite plaque dépasse une valeur de 65, de préférence 75, dans le cas d'un liant de type organique thermodurcissable, selon la norme ASTM D 2583-07 « Méthode d'essai standard pour la dureté par indentation des plastiques rigides au moyen d'un duromètre Barcol », ou dans laquelle la dureté Barcol de ladite plaque dépasse une valeur de 55, de préférence 70, dans le cas d'un liant de type thermoplastique organique, selon la norme ASTM D 2583-07 « Méthode d'essai standard pour la dureté par indentation des plastiques rigides au moyen d'un duromètre Barcol ».

15. Plaque selon l'une quelconque des revendications 12 à 14, dans laquelle la résistance aux chocs de ladite plaque est d'au moins 10 J (selon la norme EN 14617-9:2005), lorsque la couche de substrat poreux telle qu'utilisée à l'étape ii) comprend une deuxième quantité de grosses particules, en particulier dans laquelle la résistance aux chocs de ladite plaque est d'au moins 20 J (selon la norme EN 14617-9:2005), lorsque la couche de substrat poreux comprend un matériau choisi dans le groupe de fibres de verre, de fibres de lin, de fibres d'abaca, de fibres de coco, de fibres de chanvre, de fibres de jute, de fibres de carbone et de fibres de basalte, ou d'une combinaison de celles-ci.
